# EUROPEAN PATENT APPLICATION

(11) **EP 4 530 577 A1**
(43) Date of publication of application: **02.04.2025**
(21) Application number: 24195827.1
(22) Date of filing: 22.08.2024
(51) Int. Cl.: G01C 21/36, B62D 15/02, G01S 7/00, G01S 15/931, G06V 20/58, G08G 1/16

(54) **NAVIGATION SYSTEM WITH PARKING SPACE AND OBSTRUCTION DETECTION MECHANISM AND METHOD OF OPERATION THEREOF**

(30) Priority: 29.09.2023 US 202318355697
(71) Applicant: TeleNav, Inc., Santa Clara, CA 95054 (US)
(72) Inventor: LIU, Weizhe, Santa Clara, CA, 95054 (US)
(74) Representative: Lucke, Andreas

(57) **Abstract**

A navigation system (100) includes: a control circuit (534) configured to: receive a sensor data packet (111) for a range (405) captured in a scan area (204); analyze the sensor data packet (111) including storing the sensor data packet (111); parse the sensor data packet (111) to generate a processed scan (704) including identifying the real-world coordinates (203); identify a parking space (202) from the processed scan (704); compile an overhead depiction (109) including real-world coordinates (203) of the parking space (202) by analyzing the scan area (204); and merge vehicle maneuvering instructions (554) into the overhead depiction (109) for accessing the parking space (202).

## Description

### TECHNICAL FIELD

An embodiment of the present invention relates generally to a navigation system, and more particularly to a system with a parking space and obstacle detection mechanism.

### BACKGROUND ART

The rise of autonomous self-driving vehicles along with non-autonomous or semi-autonomous vehicles requires additional details to perform parking operations. The requirements of driver assisted or fully automated parking include clearly discernable boundaries in all lighting conditions. Research and development in the existing technologies can take a myriad of different directions.

Thus, a need still remains for a navigation system with a parking space and obstruction detection mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### DISCLOSURE OF THE INVENTION

An embodiment of the present invention provides a method of operation of a navigation system including: receiving a sensor data packet for a range captured in a scan area; analyzing the sensor data packet including storing the sensor data packet; parsing the sensor data packet to generate a processed scan including identifying the real-world coordinates; identifying a parking space from the processed scan; compiling an overhead depiction including the real-world coordinates of the parking space identified by analyzing the scan area; merging vehicle maneuvering instructions into the overhead depiction for accessing the parking space; and presenting the overhead depiction for displaying on a user display.

An embodiment of the present invention provides a navigation system, including a user interface configured to: receive a sensor data packet for a range captured in a scan area; a control circuit, coupled to the user interface, configured to: analyze the sensor data packet submitted to an object detection module including storing the sensor data packet; parse the sensor data packet with the object detection module to generate a processed scan including identifying the real-world coordinates; identifying a parking space by the processed scan submitted to a parking space filter; compile an overhead depiction including real-world coordinates of the parking space identified by the object detection module analyzing the scan area; merge vehicle maneuvering instructions into the overhead depiction for accessing the parking space; and transmit the overhead depiction for displaying on a user display.

An embodiment of the present invention provides a non-transitory computer readable medium including instructions for a navigation system, including: receiving a sensor data packet for a range captured in a scan area; analyzing the sensor data packet including storing the sensor data packet; parsing the sensor data packet to generate a processed scan including identifying the real-world coordinates; identifying a parking space from the processed scan; compiling an overhead depiction including the real-world coordinates of the parking space identified by analyzing the scan area; merging vehicle maneuvering instructions into the overhead depiction for accessing the parking space; and presenting the overhead depiction for displaying on a user display.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a navigation system with a parking space and obstruction detection mechanism in an embodiment of the present invention.
FIG. 2 is an example of a top view of a parking lot scan performed by the navigation system.
FIG. 3 is an exemplary block diagram of the navigation system with the parking space and obstruction detection mechanism in an embodiment of the present invention.
FIG. 4 is an exemplary object detection diagram of the parking lot scan as processed by the navigation system.
FIG. 5 is an exemplary block diagram of the navigation system.
FIG. 6 is shown an exemplary data processing diagram of a solid line processing flow of the navigation system.
FIG. 7 is an exemplary feature detection processing flow of the navigation system.
FIG. 8 is an exemplary parking space and object detection processing flow of the navigation system.
FIG. 9 is an exemplary implementation of a distance filtering element of the navigation system in an embodiment of the present invention.
FIG. 10 is an exemplary flow chart of an embodiment of the navigation system.
FIG. 11 is an exemplary flow chart of a further embodiment of the navigation system with a fixed kernel size.
FIG. 12 is an exemplary flow chart of a yet further embodiment of the navigation system with a dynamic kernel size.
FIG. 13 is an exemplary ultrasound sensor beam of the navigation system.
FIG. 14 is an exemplary object detection diagram for detecting the boundary point in an embodiment.
FIG. 15 is a flow chart of a method of operation of a navigation system in an embodiment of the present invention.

### BEST MODE FOR CARRYING OUT THE INVENTION

The following embodiments can accurately identify parking spaces under most lighting conditions, which enables vehicle movement control for operating or controlling physical movement of a vehicle. The vehicle movement control can be based on a driver assisted or an autonomous vehicle parking process that is safe and reliable due to the accuracy of the line detection.

The vehicle movement control can further be based on accurately identifying the type of parking space under various lighting conditions in order to assure the driver assisted or autonomous vehicle can be completed without risk of damage to the vehicle or any adjacent objects or property.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments of various components as a matter of descriptive convenience and are not intended to have any other significance or provide limitations for an embodiment of the present invention.

One skilled in the art would appreciate that the format with which cell phone information is expressed is not limiting to some embodiments of the invention. For example, in some embodiments, cell phone position information is presented in the format of (X, Y, Z); where X and Y and Z are three coordinates that define the geographic location, i.e., a position of the cell phone of a user.

The term "module" referred to herein can include or be implemented as or include software running on specialized hardware, hardware, or a combination thereof in the present invention in accordance with the context in which the term is used. For example, the software can be machine code, firmware, embedded code, and application software. The software can also include a function, a call to a function, a code block, or a combination thereof.

Also for example, the hardware can be gates, circuitry, processor, computer, integrated circuit, integrated circuit cores, memory devices. a pressure sensor, an inertial sensor, a microelectromechanical system (MEMS), passive devices, physical non-transitory memory medium including instructions for performing the software function, a portion therein, or a combination thereof to control one or more of the hardware units or circuits. Further, if a "module" or "unit" is written in the system claims section below, the "module" or "unit" is deemed to include hardware circuitry for the purposes and the scope of the system claims.

The modules or units in the following description of the embodiments can be coupled or attached to one another as described or as shown. The coupling or attachment can be direct or indirect without or with intervening items between coupled or attached modules or units. The coupling or attachment can be by physical contact or by communication between modules or units, such as wireless communication.

It is also understood that the nouns or elements in the embodiments can be described as a singular instance. It is understood that the usage of singular is not limited to singular but the singular usage can be applicable to multiple instances for any particular noun or element in the application. The numerous instances can be the same or similar or can be different.

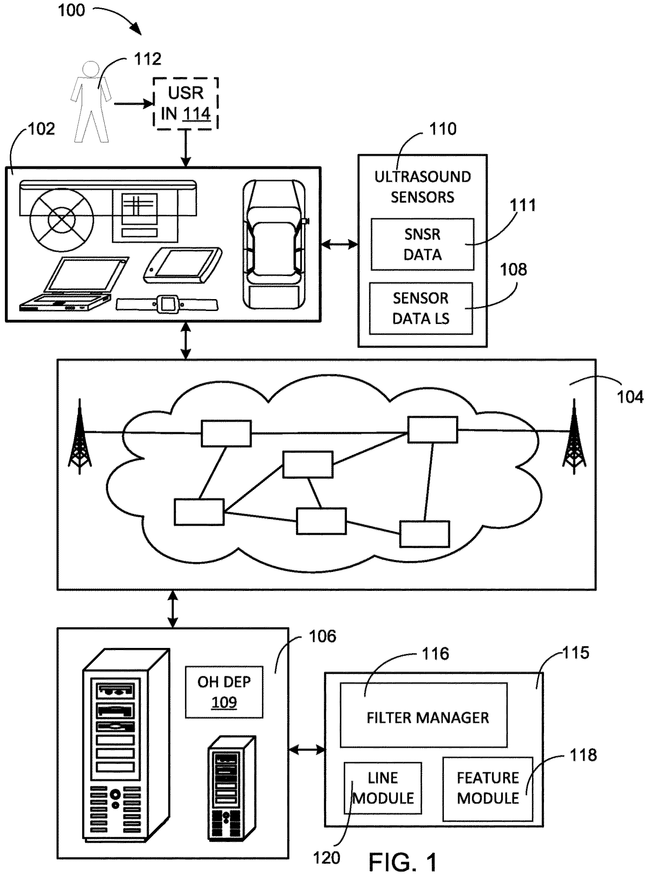

Referring now to FIG. 1, therein is shown a navigation system 100 with a parking space and obstruction detection mechanism in an embodiment of the present invention. The navigation system 100 can include a first device 102, such as a client or a server, connected to a second device 106, such as a client or server.

The navigation system 100 can include a system for searching or providing guidance or information associated with geographic locations, speed control, a regulatory system for enabling access to a device or a vehicle, or a combination thereof. The first device 102 can communicate with the second device 106 through a network 104, such as a wireless or wired network.

For example, the first device 102 can be of any of a variety of computing devices, such as a cellular phone, personal digital assistant, a notebook computer, a wearable device, internet of things (IoT) device, automotive telematics navigation system, an autonomous vehicle, or other multi-functional device. Also, for example, the first device 102 can include a device or a sub-system, an autonomous or self-maneuvering vehicle or object, a remote-controlled vehicle or object, or a combination thereof.

The first device 102 can couple, either directly or indirectly, to the network 104 to communicate with the second device 106 or can be a stand-alone device. The first device 102 can further be separate form or incorporated with a vehicle, such as a car, truck, bus, or motorcycle.

For illustrative purposes, the navigation system 100 is described with the first device 102 as a mobile computing device, although it is understood that the first device 102 can be different types of devices. For example, the first device 102 can also be a non-mobile computing device, such as a server, a server farm, or a desktop computer.

The second device 106 can be any of a variety of centralized or decentralized computing devices, or high definition video processing devices. For example, the second device 106 can be a computer, grid computing resources, a virtualized computer resource, cloud computing resource, routers, switches, peer-to-peer distributed computing devices, or a combination thereof.

The second device 106 can be centralized in a single room, distributed across different rooms, distributed across different geographical locations, or embedded within a telecommunications network. The second device 106 can couple with the network 104 to communicate with the first device 102. The second device 106 can also be a client type device as described for the first device 102.

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, a wearable device, or a different type of client device. The second device 106 can be a standalone device, or can be incorporated with a vehicle, such as a car, a truck, a bus, or a motorcycle.

Also, for illustrative purposes, the navigation system 100 is described with the second device 106 as a computing device, although it is understood that the second device 106 can be different types of devices. Also, for illustrative purposes, the navigation system 100 is shown with the second device 106 and the first device 102 as endpoints of the network 104, although it is understood that the navigation system 100 can include a different partition between the first device 102, the second device 106, and the network 104. For example, the first device 102, the second device 106, or a combination thereof can also function as part of the network 104.

The network 104 can span and represent a variety of networks. For example, the network 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path. Ethernet, digital subscriber line (DSL), fiber to the home (FTTH), and plain old telephone service (POTS) are examples of wired communication that can be included in the network 104. Further, the network 104 can traverse a number of network topologies and distances. For example, the network 104 can include direct connection, personal area network (PAN), local area network (LAN), metropolitan area network (MAN), wide area network (WAN), or a combination thereof.

The navigation system 100 can provide additional features that are not available in prior art navigation systems. The first device 102 can be coupled to ultrasound sensors 110 and a sensor data local storage 108. The ultrasound sensors 110 are sensors, such as a set of Doppler radar positioned on the first device 102, configured to monitor, observe, record, or a combination thereof the surroundings of the first device 102. The sensor data local storage 108 provides a non-transitory storage medium.

For example, the sensor data local storage 108 can be implemented in a number of ways, such as a non-volatile storage device, such as a hard disk drive, a solid state storage device (SSD), a FLASH memory card, or a combination thereof.

The first device 102 can be coupled to an object detection module 115, such as an ultrasound range evaluation module, that can be implemented in software running of specialized hardware, full hardware, or a combination thereof configured to analyze a range to correct range errors in an ultrasound scan caused by noise or reflections. The object detection module 115 can parse a sensor data packet 111 in order correct range errors and detect a parking space and obstructions captured by the ultrasound sensors 110. The range errors can be caused by noise, reflections, or a combination thereof received by the ultrasound sensors 110. For parking space detection, the network transmission is optional. During the calibration process, the first device 102 can upload of the sensor data packet 111 to the second device 106 for further analysis or to generate an updated version of a filter manager 116 to improve the detection of the parking space (not shown).

The object detection module 115 can include the filter manager 116, a feature module 118, and a line module 120 that can generate coordinates for construction of the overhead depiction 109. The filter manager 116 can be a software or hardware module capable of performing bit alignment on the input returns of the scan data within the sensor data packet 111 in order to identify a parking space and obstructions in the scan area.

The feature module 118 can be software or hardware module capable of determining the presence of the parking space and obstructions detected by the filter manager 116, which can be stored in the first device 102 or the second device 106. The feature module 118 can receive input from the line module 120, which provides the guiding parameters for identifying the different types of the parking space that is represented in the sensor data packet 111. The sensor data packet 111 can be analyzed by submitting the scan data portion of the sensor data packet 111 to the filter manager116. It is understood that other portions of the sensor data packet 111 including time, real world position, and extrinsic parameters of the ultrasonic sensor 110 can be stored in the first device 102 or the second device 106 for subsequent operations.

The line module 120 can be an updatable set of filters for identifying the parking space and obstructions, to differentiate pull-in or parallel parking spaces and obstructions located around them. The results of the analysis of the line module 120 can be stored in the storage circuitry of the first device 102 or the second device 106. The line module 120 can identify and correct the range errors captured in the sensor data packet 111.

The feature module 118 can output the overhead depiction 109 including a reference designator provided by the first device 102 indicating whether the identified parking space is suitable for the first device 102. If the parking space is suitable for the first device 102, the control guidance instructions can be generated with the overhead depiction 109 to autonomously park or assist in parking the first device 102.

The sensor data local storage 108 can be coupled to the ultrasound sensors 110 in order to store a sensor data packet 111 and an overhead depiction 109 returned from the second device 106. The first device 102 can assemble parameters for the ultrasound sensors 110, scan data, time, real world coordinates, and extrinsic parameters of the ultrasound sensor 110 to generate the sensor data packet 111 for analysis. The sensor data packet 111 can provide the information captured by the ultrasound sensors 110, a time and location, as the real world coordinates, and extrinsic parameters of the ultrasound sensor 110, for the information that was captured by the ultrasound sensors 110 and recorded in the sensor data local storage 108.

The navigation system 100 can be operated by a user 112. The user 112 can include a person or an entity accessing or utilizing the navigation system 100 or a device therein. For example, the user 112 can include a person owning or operating the first device 102, a service, or a combination thereof. Also, for example, the user 112 can access or utilize the second device 106 through the first device 102, a service, or a combination thereof.

The navigation system 100 can further process a direct user input 114 from the user 112. The direct user input 114 can include a request for navigation assistance, location of a point of interest, parking assistance, restaurant assistance, lodging assistance, location of gas stations, event reservations, or a combination thereof. The direct user input 114 can be provided by or from the user 112 directly to or directly on the first device 102. The direct user input 114 can include the input or the stimulus directly for or related to corresponding software, application, feature, or a combination thereof.

The navigation system 100 can implement one or more embodiments without the direct user input 114. The navigation system 100 can further implement one or more embodiments using the direct user input 114 unrelated thereto, previous instances of the direct user input 114, or a combination thereof. Further details are discussed below.

The second device 106 can receive the sensor data packet 111 from the first device 102 when requesting service in identifying a parking space (not shown). The second device 106 can parse the sensor data packet 111, identifying the extrinsic parameters of the ultrasound sensors 110, the real world coordinates of the ultrasound sensor 110, the time, and the scan data, in order to produce the overhead depiction 109. The overhead depiction 109 is a top down view of the space identified in the sensor data packet 111. The overhead depiction 109 can also include an indication of suitability and orientation for the first device 102. By way of an example the overhead depiction can identify the sensor data packet 111 as indicating a motorcycle parking space, a compact vehicle parking space, or an over-sized vehicle parking space.

The second device 106 can analyze the sensor data packet 111 in order to produce the overhead depiction 109 and refinements to the filter manager 116 for use by the first device 102 during a training process. By way of an example, the second device 106 can verify the sensor data packet 111 by checking the time and location information in order to identify that it represents a region including a parking space suitable for the first device 102.

The second device 106 can be coupled to the object detection module 115, such as range evaluation module, that can be implemented in software running of specialized hardware, full hardware, or a combination thereof configured to analyze the range returns from the ultrasound sensor 110. The object detection module 115 can parse the sensor data packet 111 in order to establish both parking space and obstructions for the scene captured by the ultrasound sensors 110.

The object detection module 115 can include the filter manager116, the feature module 118, and the line module 120 that can generate coordinates for construction of the overhead depiction 109. The filter manager 116 can be a software or hardware module capable of performing adjustment of filter parameters to optimize the scan data within the sensor data packet 111 in order to identify the bounding boxes and endpoints of lines forming a parking space and other markings.

The feature module 118 can be software or hardware module capable of determining the position of lines based on the bounding boxes and the endpoints generated by the filter manager 116, which can be stored in the second device 106. The feature module 118 can receive input from the line module 120, which provides the guiding parameters for identifying the different types of the parking space that is represented in the sensor data packet 111. The sensor data packet 111 can be analyzed by submitting the scan data portion of the sensor data packet 111 to the filter manager 116. It is understood that other portions of the sensor data packet 111 including time, real world position, and extrinsic parameters of the ultrasound sensor 110 can be stored in the second device 106 for subsequent operations.

The line module 120 can be an updatable set of parameters for identifying the parking space, including line length, line spacing, placard identification, and parking orientation, to differentiate pull-in or parallel parking spaces, or the motorcycle parking space. The results of the analysis of the line module 120 can be stored in the storage circuitry of the second device 106.

The feature module 118 can output the overhead depiction 109 including a reference designator provided by the first device 102 or the second device 106 indicating whether the identified parking space is suitable for the first device 102. If the parking space is suitable for the first device 102, the second device 106 can include control guidance instructions in the overhead depiction 109 to autonomously park or assist in parking the first device 102.

It has been discovered that the navigation system 100 can reliably identify suitable parking spaces for the first device 102 by capturing the ranges as detected by the ultrasound sensors 110 and applying the object detection module 115 in order to identify the type of parking space that was identified by the ultrasound sensors 110. The first device 102 can verify that the identified parking space is suitable for the first device 102 and provide control instructions as part of the overhead depiction 109.

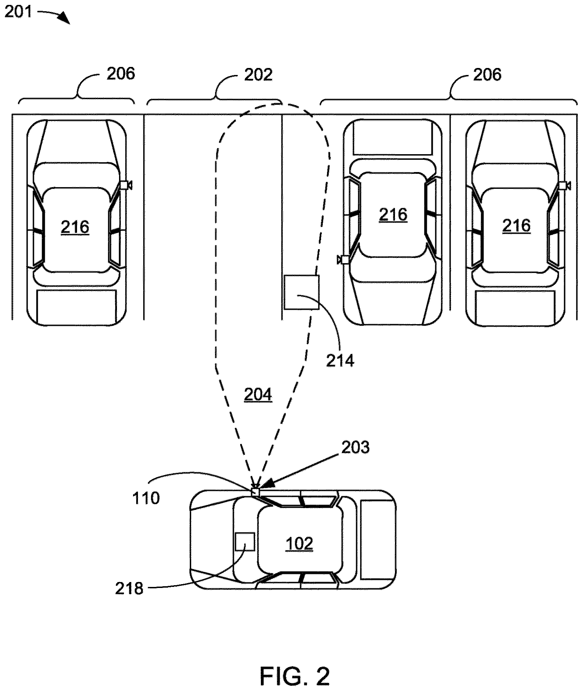

Referring now to FIG. 2, therein is shown an example of a top view of a parking lot scan 201 performed by the navigation system 100 of FIG. 1. The parking lot scan 201 of the navigation system 100 depicts the first device 102 in search of a parking space 202. The first device 102 can be an autonomous vehicle or a parking assisted vehicle.

The first device 102 is an object or a machine used for transporting people or goods capable of automatically maneuvering or operating the object or the machine. The first device 102 can include vehicles accessible by the user 112 of FIG. 1 for control, maneuver, operation, or a combination thereof. For example, the first device 102 can include any of a car, a truck, a cart, or a motorcycle.

The first device 102 can further be controlled or maneuvered without the direct user input 114 of FIG. 1 corresponding to the maneuver or the movement. For example, the first device 102 can be an autonomous vehicle including a self-driving vehicle, or a vehicle with automatic maneuvering features, such as smart cruise control or preventative breaking. The first device 102 can include automated parking system for identifying and accessing the parking space 202 without the direct user input 114. Also, for example, the first device 102 can be controlled or maneuvered by the navigation system 100, including the navigation system 100 controlling physical maneuvers or movements of the first device 102.

The first device 102 can identify real world coordinates 203 of the ultrasound sensor 110 by a GPS reading or cell tower triangulation. The first device 102 can include the ultrasound sensor 110 for scanning a scan area 204 in search of the parking space 202. It is understood that the scan area 204 can include the parking space 202, an occupied parking space 216 or an obstruction 217, such as a structural pillar of the parking structure. The scan area 204 is defined as the area limited by the viewing angle of the ultrasound sensor 110. The scan area 204 can be displayed on a user display 218, such as a Liquid Crystal Display (LCD) or a Thin Film Transistor (TFT) display.

Occupied parking spaces 206 can be an area within a parking lot that is occupied by a parked vehicle 216. A structural obstruction 214 can be a concrete pillar that is part of the parking structure, a garbage container, a shopping cart, a motorcycle, or the like.

The first device 102 can compile a scan of the scan area 204, the real world coordinates 203 of the ultrasound sensor 110, and the extrinsic parameters of the ultrasound sensor 110. The first device 102 can use the object detection module 115 of FIG. 1 to begin the process of identifying the parking space 202 for the autonomous vehicle or parking assist function of the first device 102.

It has been discovered that the navigation system 100 can differentiate the parking space 202, the occupied parking spaces 206, and the parked vehicle 216 by analyzing the returned ranges from the scan area 204 of the ultrasound sensor 110.

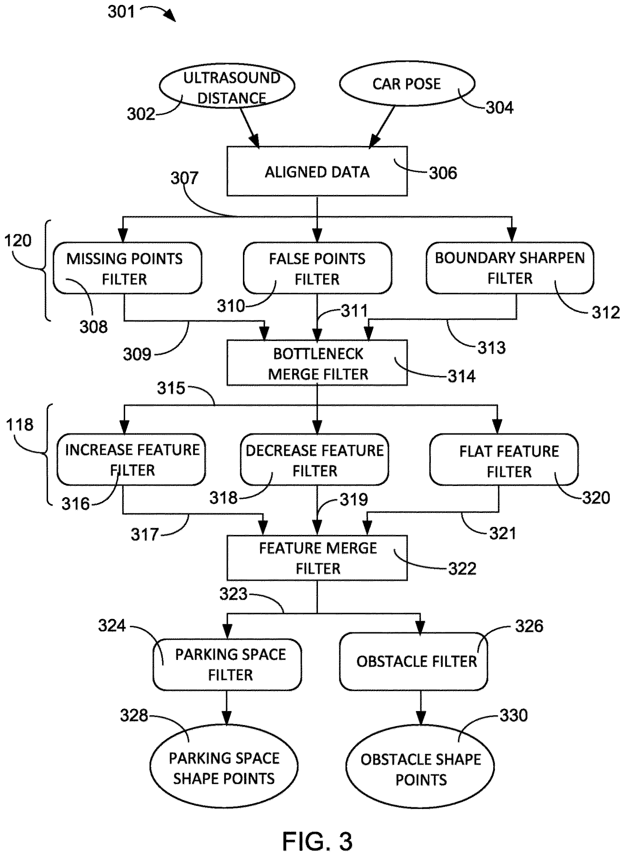

Referring now to FIG. 3, therein is shown an exemplary block diagram 301 of the navigation system 100 with the parking space and obstruction detection mechanism in an embodiment of the present invention. The exemplary block diagram 301 depicts an ultrasound distance module 302 that collects detected ranges returned from the scan area 204 of FIG. 2 of the ultrasound sensor 110 of FIG. 1. The ultrasound distance module 302 can be a specific hardware structure executing software or all hardware. The ultrasound distance module 302 can receive ranging input from the ultrasound sensor 110 at fixed time intervals. Each of the detected ranges can be correlated with a car pose 304. The car pose 304 provides the real world coordinates 203 of FIG. 2 of the ultrasound sensor 110, as well as the yaw angle of the first device 102 of FIG. 1 in order to provide the relative position of the first device 102 to the scan area 204.

An aligned data module 306 can accept the returned ranges from the ultrasound distance module 302 and the real world coordinates 203 and yaw angle from the car pose 304. The aligned data module 306 can be a specific hardware executing software or all hardware. The aligned data module 306 can identify the real world coordinates 203 for each of the points identified by the ultrasound distance module 302 to produce an aligned data input 307.

The aligned data module 306 can be coupled to a missing points filter 308, a false points filter 310 and a boundary sharpen filter 312. By way of an example, the combination of the missing points filter 308, the false points filter 310 and the boundary sharpen filter 312 constitutes the line module 120. The missing points filter 308 can be a specific hardware executing software or all hardware configured to identify a missing scan point when adjacent scan points suggest what a missing range should be. The missing points filter 308 can process the aligned data input 307 to substitute an appropriate value for the range that is missing or much greater than expected to produce a missing point scan 309. This condition can be caused by acoustic interference, harmonic reflections, or echo dropouts. The missing point scan 309 can identify the position of the missing points scan 309 within the aligned data input 307.

The false points filter 310 can be a specific hardware executing software or all hardware configured to identify a reported point in the aligned data input 307 that has a shorter range than the actual position of a detected object, such as the parked vehicle 216 of FIG. 2 or the structural obstruction 214 of FIG. 2. It is understood that the ultrasound sensor 110 can receive erroneous ranges in an area with complex surfaces, such as an automobile, a structure wall, decorative lattice, or the like due to echoes caused by the complex surface. The false points filter 310 can produce a false point scan 311 indicating the positions of the false point scan 311 in the aligned data input 307.

The boundary sharpen filter 312 can be a specific hardware executing software or all hardware configured to identify sudden changes in the aligned data input 307 with ranges detected by the ultrasound sensor 110. By way of an example, a transition from an obstruction to an open space can present intermediate range that is impacted by the surface of the obstruction. The subsequent range samples can show a more dramatic range change. The boundary sharpen filter 312 can produce a boundary points scan 313 that can show transitions to an increase in range or a decrease in range, in the aligned data input 307.

The output of the missing points filter 308, the false points filter 310 and the boundary sharpen filter 312 can be combined in a bottleneck merge filter 314. The bottleneck merge filter 314 can process the missing points scan 309, the false point scan 311, and the boundary points scan 313 in the aligned data input 307 to generate a corrected data input 315. The corrected data input 315 can have the missing points scan 309, the false point scan 311, and the boundary points scan 313 replaced by the appropriate point ranges in the corrected data input 315.

The corrected data input 315 can be coupled to an increase feature filter 316, a decrease feature filter 318, and a flat feature filter 320 to perform the analysis of the feature module 118. The increase feature filter 316 can be a specific hardware executing software or all hardware configured to identify an increase point scan 317 that defines the actual transition from a near range to a distant range taking into account the edge effects of the scan area 204 of FIG. 2. The increase point scan 317 can identify the final near range point prior to a deeper open space having a longer range.

The decrease feature filter 318 can receive the corrected data input 315 in order to identify a decrease point scan 319. The decrease feature filter 318 can be a specific hardware executing software or all hardware configured to identify the decrease point scan 319. The decrease point scan 319 can be defined as a transition point from the deeper open space, having a longer range, to decreased range closer to the ultrasound sensor 110.

The flat feature filter 320 can receive the corrected data input 315 in order to identify transition points scan 321 that identify the transition from a near range to a longer range and from the longer range to the near range. The flat feature filter 320 can be a specific hardware executing software or all hardware configured to identify the transition points scan 321.

A feature merge filter 322 can be a specific hardware executing software or all hardware configured to combine the increase point scan 317, the decrease point scan 319, and the transition points scan 321 in order to produce a smoothed and corrected version of the aligned data 315. The feature merge filter 322 can generate a smoothed feature scan 323.

The smooth feature scan 323 can be coupled to a parking space filter 324 and an obstacle filter 326. The parking space filter 324 can be a specific hardware executing software or all hardware configured to identify parking space shape points 328. The parking space shape points can be bordered by the transition points scan 321 to include the identified points with the longer range between the transition points scan 321. The obstacle filter 326 can be a specific hardware executing software or all hardware configured to identify obstacle shape points 330 that can represent the parked vehicle 216 or the structural obstruction 214.

It has been discovered that the manipulation of the missing points filter 308, the false points filter 310, the boundary sharpen filter 312, the increase feature filter 316, the decrease feature filter 318, and the flat feature filter 320 can efficiently transform a noisy output from the ultrasound distance module 302 to the smooth feature scan 323. The calibration of the forementioned filters can be performed by a processor of manually to adjust for different versions of the ultrasound sensor 110. It is understood that the hardware features of the forementioned filters can correct the aligned data input 307 with just hardware delays in the order of 1 to 2 milliseconds. The ultrasound sensor 110 can operate on a period of 5-10 milliseconds per range sample point.

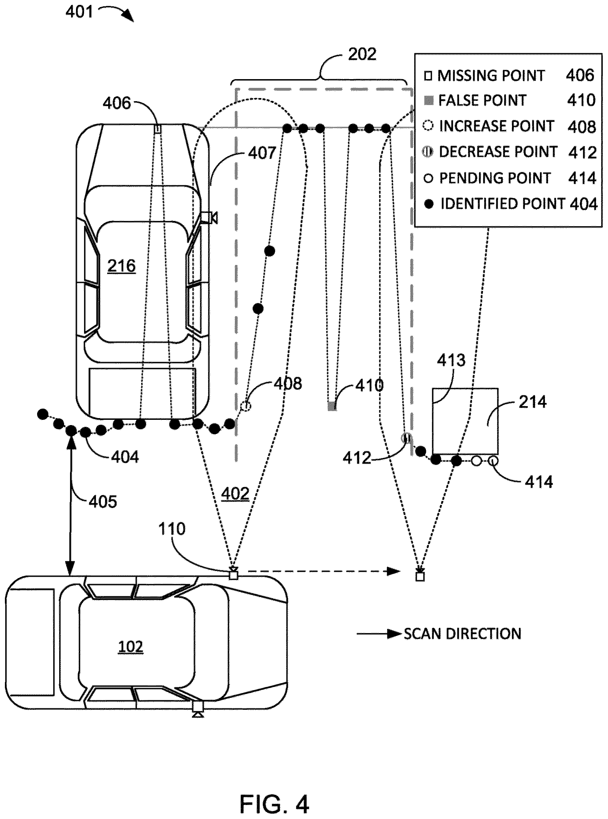

Referring now to FIG. 4, therein is shown an example of an object detection diagram 401 of the parking lot scan as processed by the navigation system 100 of FIG. 1. The example of the object detection diagram 401 depicts the first device 102 projecting a scan area 402 from the ultrasound sensor 110. The first device 102 can travel through the parking area in a scan direction at a slow speed. The object detection diagram 401 shows a series of identified points 404 indicating a range 405 to some obstruction. The ultrasound sensor 110 can transmit a ranging pulse periodically. By way of an example, the first device 102 moving at 10 miles per hour and transmitting at 200 Hz provides the identified points 404 at approximately 2 inch spacing.

During the scan of the parking space 202, a missing point 406 can be detected when a sample of the range 405 has a large increase followed by a return to the previous range 405 in the next sample. The missing point 406 can be caused by echoes or interference cancelling the acoustic return. The missing point 406 can be bordered on both sides by the identified point 404 at approximately the same range 405.

As the first device 102 continues moving in the scan direction beyond an edge 407 of the parked vehicle 216, an increase in the range 405 of approximately 10 percent over the previous identified point 404 can be defined as an increase point 408 and the next sample of the identified point 404 can have an additional increase in the range 405. It is understood that the identified point beyond the increase point can be impacted by reflections from the edge 407 of the parked vehicle 216. A false point 410 can be detected when a sample point has greater than 10 percent decrease in the range 405 bordered on both sides by the identified point 404 at substantially the same value of the range 405 as each other.

A decrease point 412 can be detected when the sample point has greater than 50 percent decrease in the range 405 and has the next sample of the identified point 404 shows a greater decrease in the range 405 than the decrease point 412. The region between the increase point 408 and the decrease point 412 can be described as the parking space 202. It is understood that the series of the identified points 404 having substantially the same value of the range 405 can delimit the structural obstruction 214 or the parked vehicle 216. It is understood that a side surface 413 of the structural obstruction 214 can cause a shift in the location of the decrease point 412 due to multiple reflections from the side surface 413. By way of an example, a pending point 414 can be an unverified estimate that remains outside the scan area 402.

It has been discovered that the identification of the missing point and the false point can be filtered out of a range plot in order to identify the regions as the structural obstruction 214, the parked vehicle, or a combination thereof. The areas adjacent to the parked vehicle 216 can have their range 405 impacted by reflections emanating from the side of the parked vehicle 216. By applying a series of filters in a structured manner, the navigation system can identify the parked vehicle 216, the parking space 202, and the structural obstruction 214.

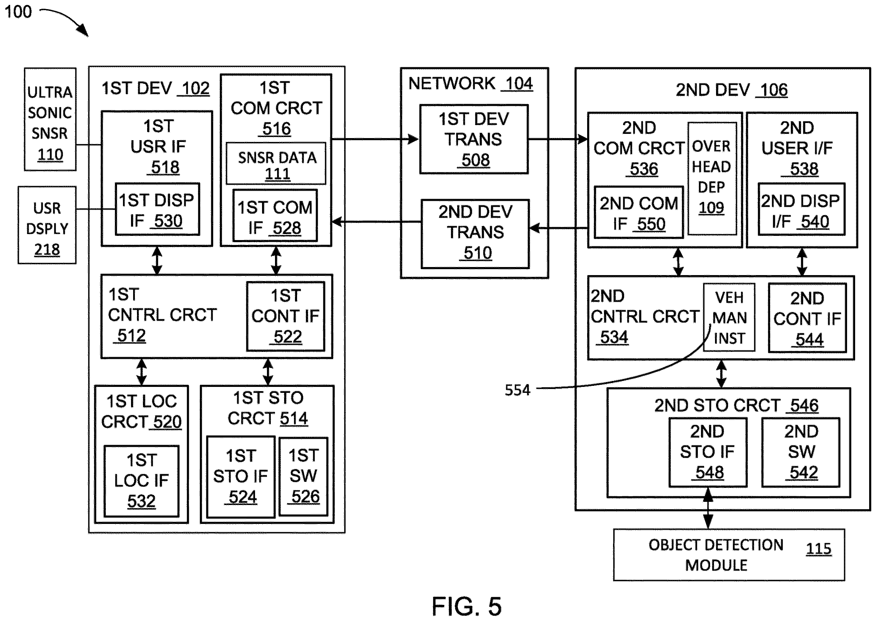

Referring now to FIG. 5, therein is shown an exemplary block diagram of the navigation system 100 of FIG. 1. The navigation system 100 can include the first device 102 of FIG. 1, the network 104 of FIG. 1, and the second device 106 of FIG. 1. The first device 102 can send information in a first device transmission 508 over the network 104 to the second device 106. The second device 106 can send information in a second device transmission 510 over the network 104 to the first device 102.

For illustrative purposes, the navigation system 100 is shown with the first device 102 as a client device, although it is understood that the navigation system 100 can include the first device 102 as a different type of device. For example, the first device 102 can be a server containing the first display interface 530 coupled to the user display 218.

Also, for illustrative purposes, the navigation system 100 is shown with the second device 106 as a server, although it is understood that the navigation system 100 can include the second device 106 as a different type of device. For example, the second device 106 can be a client device. By way of an example, the navigation system 100 can be implemented entirely on the first device 102. The second device 106 can provide enhancement of the filter manager116 of FIG. 1.

Also, for illustrative purposes, the navigation system 100 is shown with interaction between the first device 102 and the second device 106. However, it is understood that the first device 102 can be a part of or the entirety of the autonomous vehicle, the smart vehicle, or a combination thereof. Similarly, the second device 106 can similarly interact with the first device 102 representing the autonomous vehicle, the intelligent vehicle, or a combination thereof.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control circuit 512, a first storage circuit 514, a first communication circuit 516, a first user interface 518, and a first location circuit 520. The first control circuit 512 can include a first control interface 522. The first control circuit 512 can execute a first software 526 to provide the intelligence of the navigation system 100.

The first control circuit 512 can be implemented in a number of different manners. For example, the first control circuit 512 can be a processor, an application specific integrated circuit (ASIC), an embedded processor, a microprocessor, a hardware control logic, a hardware finite state machine (FSM), a digital signal processor (DSP), or a combination thereof. The first control interface 522 can be used for communication between the first control circuit 512 and other functional units or circuits in the first device 102. The first control interface 522 can also be used for communication that is external to the first device 102.

The first control interface 522 can receive information from the other functional units/circuits or from external sources, or can transmit information to the other functional units/circuits or to external destinations. The external sources and the external destinations refer to sources and destinations external to the first device 102.

The first control interface 522 can be implemented in different ways and can include different implementations depending on which functional units/circuits or external units/circuits are being interfaced with the first control interface 522. For example, the first control interface 522 can be implemented with a pressure sensor, an inertial sensor, a microelectromechanical system (MEMS), optical circuitry, waveguides, wireless circuitry, wireline circuitry, or a combination thereof.

The first storage circuit 514 can store the first software 526. The first storage circuit 514 can also store the relevant information, such as data representing incoming images, data representing previously presented image, sound files, or a combination thereof.

The first storage circuit 514 can be a volatile memory, a nonvolatile memory, an internal memory, an external memory, or a combination thereof. For example, the first storage circuit 514 can be a nonvolatile storage such as non-volatile random-access memory (NVRAM), Flash memory, disk storage, or a volatile storage such as static random-access memory (SRAM).

The first storage circuit 514 can include a first storage interface 524. The first storage interface 524 can be used for communication between the first storage circuit 514 and other functional units or circuits in the first device 102, such as the sensor data local storage 108. The first storage interface 524 can also be used for communication that is external to the first device 102.

The first storage interface 524 can receive information from the other functional units/circuits or from external sources, or can transmit information to the other functional units/circuits or to external destinations. The external sources and the external destinations refer to sources and destinations external to the first device 102. The first storage interface 524 can receive input from and source data to the object detection module 115.

The first storage interface 524 can include different implementations depending on which functional units/circuits or external units/circuits are being interfaced with the first storage circuit 514. The first storage interface 524 can be implemented with technologies and techniques similar to the implementation of the first control interface 522.

The first communication circuit 516 can enable external communication to and from the first device 102. For example, the first communication circuit 516 can permit the first device 102 to communicate with the second device 106, an attachment, such as a peripheral device or a desktop computer, and the network 104.

The first communication circuit 516 can also function as a communication hub allowing the first device 102 to function as part of the network 104 and not limited to be an endpoint or terminal circuit to the network 104. The first communication circuit 516 can include active and passive components, such as microelectronics or an antenna, for interaction with the network 104.

The first communication circuit 516 can include a first communication interface 528 of FIG. 5. The first communication interface 528 can be used for communication between the first communication circuit 516 and other functional units or circuits in the first device 102. The first communication interface 528 can receive information from the second device 106 for distribution to the other functional units/circuits or can transmit information to the other functional units or circuits.

The first communication interface 528 can include different implementations depending on which functional units or circuits are being interfaced with the first communication circuit 516. The first communication interface 528 can be implemented with technologies and techniques similar to the implementation of the first control interface 522.

The first user interface 518 allows the user 112 of FIG. 1 to interface and interact with the first device 102. The first user interface 518 can include an input device and an output device. Examples of the input device of the first user interface 518 can include a keypad, a touchpad, soft-keys, a keyboard, a microphone, an infrared sensor for receiving remote signals, the ultrasound sensor 110, or any combination thereof to provide data and communication inputs. By way of an example, the ultrasound sensor 110 can connect to the first user interface 518 through a wired or wireless connection. The first user interface 518 can pass the input from the ultrasound sensor 110 to the first control circuit 512 for processing and storage. During training of the object detection module 115, the first communication interface 528 can transfer the input from the ultrasound sensors 110, the location of the ultrasound sensors 110, and the extrinsic parameters of the ultrasound sensor 110 to the second device 106 to enhance the accuracy and reliability of the filter manager116 of FIG. 1 and the line module 120 of FIG. 1.

The first user interface 518 can include a first display interface 530. The first display interface 530 can include an output device. The first display interface 530 can include the user display 218, a projector, a video screen, a speaker, or any combination thereof.

The first control circuit 512 can operate the first user interface 518 to display information generated by the navigation system 100. The first control circuit 512 can also execute the first software 526 for the other functions of the navigation system 100, including receiving location information from the first location circuit 520. The first control circuit 512 can access the first location circuit 520 in order to determine the car pose 304 of FIG. 3 and determine the global position of the ultrasound sensors 110. The first control circuit 512 can further execute the first software 526 for interaction with the network 104 via the first communication circuit 516.

The first control circuit 512 can operate the first user interface 518 to collect data from the ultrasound sensors 110. The first control circuit 512 can also calculate location information, including speed, direction, and yaw angle of the first device 102, based on information received from the first location circuit 520. While operating as the parking space identification mechanism, the first control circuit 512 can compile the sensor data packet 111, including scan of the scan area 204 of FIG. 2, the real-world coordinates 203 of the ultrasound sensor 110, and the extrinsic parameters of the ultrasound sensor 110. The first control circuit 512 can operate the object detection module 115 in order to deliver the overhead view 109 for display on the user display 218 and generate vehicle maneuvering instructions 554 to autonomously park or assist in parking the first device 102.

The first location circuit 520 can generate location information in real-world coordinates, current heading, current acceleration, and current speed of the first device 102, as examples. The first location circuit 520 can be implemented in many ways. For example, the first location circuit 520 can function as at least a part of the global positioning system, an inertial navigation system, a cellular-tower location system, a pressure location system, or any combination thereof. Also, for example, the first location circuit 520 can utilize components such as an accelerometer or global positioning system (GPS) receiver. In combination with the first control circuit 512, the first location circuit 520 can calculate pseudo ranges for four or more of the global positioning system satellites (not shown).

The first location circuit 520 can include a first location interface 532. The first location interface 532 can be used for communication between the first location circuit 520 and other functional units or circuits in the first device 102, including the ultrasound sensor 110.

The first location interface 532 can receive information from the other functional units/circuits or from external sources, or can transmit information to the other functional units/circuits or to external destinations. The external sources and the external destinations refer to sources and destinations external to the first device 102.

The first location interface 532 can include different implementations depending on which functional units/circuits or external units/circuits are being interfaced with the first location circuit 520. The first location interface 532 can be implemented with technologies and techniques similar to the implementation of the first control circuit 512, including circuits, gates, analog circuitry, processors, or application specific integrated circuits (ASICs).

The second device 106 can be optimized for implementing an embodiment of the present invention in a multiple device embodiment with the first device 102. The second device 106 can provide the additional or higher performance processing power compared to the first device 102. The second device 106 can include a second control circuit 534, a second communication circuit 536, a second user interface 538, and a second storage circuit 546.

The second user interface 538 allows a user (not shown) to interface and interact with the second device 106. The second user interface 538 can include an input device and an output device. Examples of the input device of the second user interface 538 can include a keypad, a touchpad, soft-keys, a keyboard, a microphone, or any combination thereof to provide data and communication inputs. Examples of the output device of the second user interface 538 can include a second display interface 540. The second display interface 540 can include a display, a projector, a video screen, a speaker, or any combination thereof.

During the training process, the second control circuit 534 can receive the sensor data packet 111 through the second communication circuit 536. The second control circuit can verify the content of the sensor data packet 111 does indeed represent the scan area 204 of FIG. 2 that was identified by the location of the first device 102, by examining the range 405 of FIG. 4 of the scan area 204, the real-world coordinates 203 of the ultrasound sensor 110, and the extrinsic parameters of the ultrasound sensor 110. Once the sensor data packet 111 has been verified, the second control circuit 534 can transfer the sensor data packet 111 through the second storage circuit 546 to the object detection module 115 for processing.

The second control circuit 534 can execute a second software 542 to provide the intelligence of the second device 106 of the navigation system 100. The second software 542 can operate in conjunction with the first software 526. The second control circuit 534 can provide additional performance compared to the first control circuit 512.

The second control circuit 534 can operate the second user interface 538 to display information. The second control circuit 534 can also execute the second software 542 for the other functions of the navigation system 100, including operating the second communication circuit 536 to communicate with the first device 102 over the network 104.

The second control circuit 534 can be implemented in a number of different manners. For example, the second control circuit 534 can be a processor, an embedded processor, a microprocessor, hardware control logic, a hardware finite state machine (FSM), a digital signal processor (DSP), or a combination thereof.

The second control circuit 534 can include a second control interface 544. The second control interface 544 can be used for communication between the second control circuit 534 and other functional units or circuits in the second device 106. The second control interface 544 can also be used for communication that is external to the second device 106.

The second control interface 544 can receive information from the other functional units/circuits or from external sources, or can transmit information to the other functional units/circuits or to external destinations. The external sources and the external destinations refer to sources and destinations external to the second device 106.

The second control interface 544 can be implemented in different ways and can include different implementations depending on which functional units/circuits or external units/circuits are being interfaced with the second control interface 544. For example, the second control interface 544 can be implemented with a pressure sensor, an inertial sensor, a microelectromechanical system (MEMS), optical circuitry, waveguides, wireless circuitry, wireline circuitry, or a combination thereof.

The second storage circuit 546 can store the second software 542. The second storage circuit 546 can also store the information such as data representing incoming images, data representing previously presented image, sound files, or a combination thereof. The second storage circuit 546 can be sized to provide the additional storage capacity to supplement the first storage circuit 514. During the calibration process the second storage circuit 546 can receive the overhead depiction 109 of the scan area 204 identifying the parking space 202. The second storage circuit 546 can pass the overhead depiction 109 to incorporate the vehicle maneuvering instructions 554 for accessing the parking space 202 by the first device 102. The overhead depiction 109 can then be passed through the second communication circuit 536 for transmission to the first device 102.

For illustrative purposes, the second storage circuit 546 is shown as a single element, although it is understood that the second storage circuit 546 can be a distribution of storage elements. Also, for illustrative purposes, the navigation system 100 is shown with the second storage circuit 546 as a single hierarchy storage system, although it is understood that the navigation system 100 can include the second storage circuit 546 in a different configuration. For example, the second storage circuit 546 can be formed with different storage technologies forming a memory hierarchal system including different levels of caching, main memory, rotating media, or off-line storage.

The second storage circuit 546 can be a controller of a volatile memory, a nonvolatile memory, an internal memory, an external memory, or a combination thereof. For example, the second storage circuit 546 can be a controller of a nonvolatile storage such as non-volatile random-access memory (NVRAM), Flash memory, disk storage, or a volatile storage such as static random access memory (SRAM).

The second storage interface 548 can receive information from the other functional units/circuits or from external sources, or can transmit information to the other functional units/circuits or to external destinations. The external sources and the external destinations refer to sources and destinations external to the second device 106.

The second storage interface 548 can include different implementations depending on which functional units/circuits or external units/circuits are being interfaced with the second storage circuit 546. The second storage interface 548 can be implemented with technologies and techniques similar to the implementation of the second control interface 544. The second storage circuit 546 can receive real-world locations of the identified points 404 from the object detection module 115.

The second control circuit 534 can generate vehicle maneuvering instructions 554 and the overhead depiction 109 from the real-world locations of the identified points 404. During the training process the second control circuit 534 can merge the vehicle maneuvering instructions 554 into the overhead depiction 109 for transmission to the first device 102. By way of an example, the real-world locations of the identified points 404 can be the geometric conversion of the series of the identified points 404, the missing point 406, the increase point 408, the decrease point 412, or a combination thereof in real world coordinates based on the GPS position of the ultrasound sensor 110 as provided by the first device 102 and an extrinsic calibration of the ultrasound sensor 110.

The second communication circuit 536 can enable external communication to and from the second device 106. For example, the second communication circuit 536 can permit the second device 106 to communicate with the first device 102 over the network 104. By way of an example, the second device 106 can provide the overhead depiction 109 to the first device 102 in response to receiving the sensor data packet 111.

The second communication circuit 536 can also function as a communication hub allowing the second device 106 to function as part of the network 104 and not limited to be an endpoint or terminal unit or circuit to the network 104. The second communication circuit 536 can include active and passive components, such as microelectronics or an antenna, for interaction with the network 104.

The second communication circuit 536 can include a second communication interface 550. The second communication interface 550 can be used for communication between the second communication circuit 536 and other functional units or circuits in the second device 106. The second communication interface 550 can receive information from the other functional units/circuits or can transmit information to the other functional units or circuits.

The second communication interface 550 can include different implementations depending on which functional units or circuits are being interfaced with the second communication circuit 536. The second communication interface 550 can be implemented with technologies and techniques similar to the implementation of the second control interface 544.

During the training process the first communication circuit 516 can couple with the network 104 to send the sensor data packet 111 of FIG. 1 to the second device 106 in the first device transmission 508. The second device 106 can receive information in the second communication circuit 536 from the first device transmission 508 of the network 104.

The second communication circuit 536 can couple with the network 104 to send information to the first device 102, including the overhead depiction 109 in the second device transmission 510. The first device 102 can receive information in the first communication circuit 516 from the second device transmission 510 of the network 104. The navigation system 100 can be executed by the first control circuit 512, the second control circuit 534, or a combination thereof. For illustrative purposes, the second device 106 is shown with the partition containing the second user interface 538, the second storage circuit 546, the second control circuit 534, and the second communication circuit 536, although it is understood that the second device 106 can include a different partition. For example, the second software 542 can be partitioned differently such that some or all of its function can be in the second control circuit 534 and the second communication circuit 536. Also, the second device 106 can include other functional units or circuits not shown in FIG. 5 for clarity.

The functional units or circuits in the first device 102 can work individually and independently of the other functional units or circuits. The first device 102 can work individually and independently from the second device 106 and the network 104.

The functional units or circuits in the second device 106 can work individually and independently of the other functional units or circuits. The second device 106 can work individually and independently from the first device 102 and the network 104.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

For illustrative purposes, the navigation system 100 is described by operation of the first device 102 and the second device 106. It is understood that the first device 102 and the second device 106 can operate any of the modules and functions of the navigation system 100.

By way of a further example, the first device 102 can be the autonomous vehicle. The first user interface 518 can receive input from the ultrasound sensor 110 of FIG. 1, for compiling the sensor data packet 111 of FIG. 1. The sensor data packet 111 can be generated by the first control circuit 512 from the ultrasound sensor 110 and the first location circuit 520. The sensor data packet 111 can be sent through the first communication circuit 516 and the network 104 to the second device 106 for processing by the second control circuit 534 and the object detection module 115.

It has been discovered that the second device 106 can receive the sensor data packet 111 from the first device 102 that requires identification of the parking space 202 of FIG. 2. The second control circuit 534 can verify the sensor data packet 111 and pass the information to the object detection module 115 for analysis. When the object detection module 115 has analyzed the data and assembled the overhead depiction 109, the second control unit can incorporate maneuvering instructions for the first device 102 to access the parking space 202 or continue searching for an appropriate one of the parking space 202. The overhead depiction 109 can then be passed to the second communication circuit 536 for transfer to the first device 102. The speed of the conversion is essential to the safe operation of the first device 102 while in parking assist or autonomous driving mode.

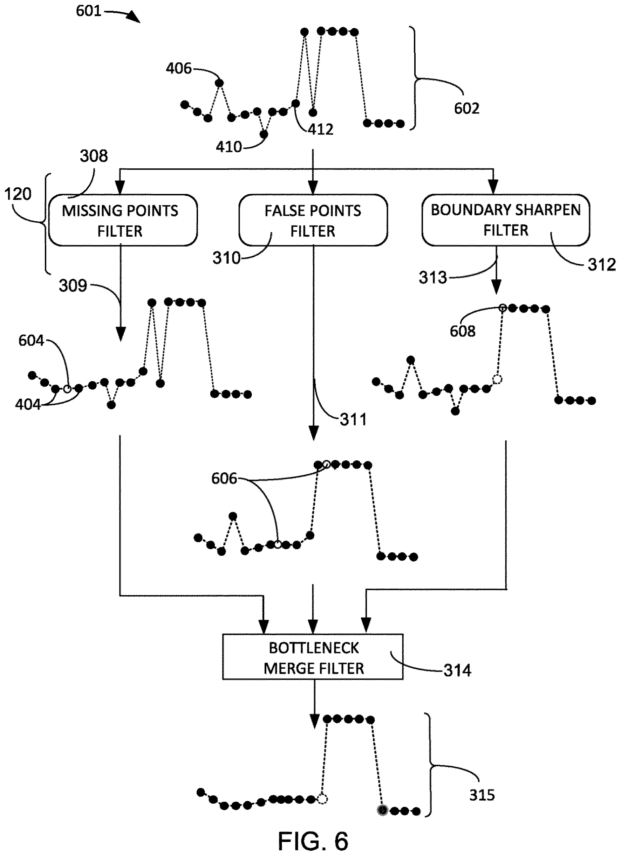

Referring now to FIG. 6, therein is shown an exemplary data processing diagram 601 of a solid line processing data flow of the navigation system. The exemplary block diagram 601 of the solid line processing data flow can include the line module 120 processing a range data scan 602 as the input. The line module 120 can include the missing points filter 308, the false points filter 310, and the boundary sharpen filter 312. It is understood that the object detection module 115 of FIG. 1 and its sub-components can be software executed by the second control circuit 534, the first control circuit 512, or a combination thereof. It is further understood that the object detection module 115 and its sub-components can have specific hardware assist logic where necessary to speed-up the object identification process.

The range data scan 602 can be concurrently submitted to the missing points filter 308, the false points filter 310, and the boundary sharpen filter 312. The processing by the line module 120 can address the various issues associated with addressing the noisy environmental issues of the ultrasound sensor 110. The missing points filter 308 can identify and correct the missing point 406 identified in the range data scan 602. The output of the missing points filter 308 can be the missing points scan 309 that includes a corrected range 604 substituted for the missing point 406. The corrected range 604 can be defined as the average of the range presented by the two adjacent identified points 404. Since the missing points filter 308 only addresses the correction of the missing point 406, the correction cab be completed very quickly and while the false point filter 310 and the boundary sharpen filter 312 are performing other corrections.

The false point filter 310 can identify the false point 410 as a shorter range that is bordered by substantially equal value of the range 405 of FIG. 4. The false point filter 310 can output the false point scan 311 and correct any of the false point 410 with an adjusted range 606. The adjusted range 606 can be defined as the average of the range presented by the two adjacent identified points 404. The boundary sharpen filter 312 can identify the increase point 412 as an increase in the range 405 over the previous one of the identified points 404 and followed by a further increase in the range 405 of the next identified point 404. The identification of the increase point 412 can provide an essential reference for the detection of the parking space 202 of FIG. 2. The boundary sharpen filter 312 can output the boundary points scan 313 can position a follow-on point 608 in the sample following the increase point 412 at the range 405 of the next sample of the identified point 404.

The bottleneck merge filter 314 can receive the missing points scan 309, the false point scan 311, and the boundary points scan 313 in order to generate the corrected data input 315. The corrected data input 315 includes the corrections for the corrected range 604, the adjusted range 606, and the follow-on point 608. The corrected data input 315 can be represented as the output of the line module 120 and is input to the feature module 118.

It has been discovered that the line module 120 can correct errors in the range data scan 602 The missing points filter 308, the false points filter 310, and the boundary sharpen filter 312 can operate concurrently to produce the corrected data input 315 with the bottleneck merge filter 314. It is understood that each of the identified points 404 is the range 405 of a specific sample point. The corrected data input 315 represents a clarification and correction of the errors caused by the noisy environment of the ultrasound sensor 110.

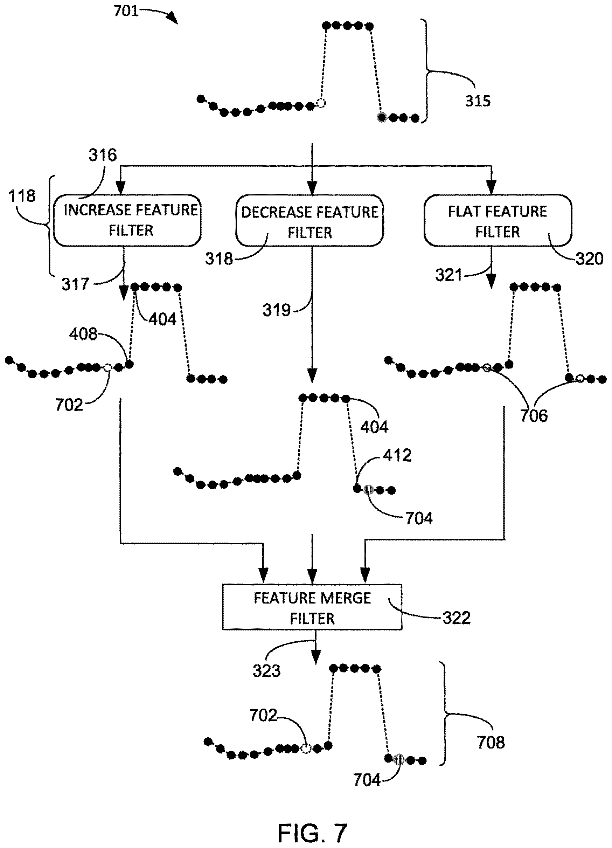

Referring now to FIG. 7, therein is shown an exemplary feature detection processing flow 701 of the navigation system 100 of FIG. 1. The exemplary feature detection processing flow 701 depicts the corrected data input 315 coupled to the feature module 118 for processing. The corrected data input 315 can be concurrently processed by the increase feature filter 316, the decrease feature filter 318 and the flat feature filter 320.

The increase feature filter 316 can scan the range 405 of FIG. 4 represented in the corrected data input 315. By monitoring the range 405 of the next identified point 404 and detecting an increase in the range 405 that is greater than 10 percent of the range 405 of the currently identified point 404 can identify the increase point 408. The output of the increase feature filter 316 can be the increase point scan 317, which identifies an adjusted increase point 702. The adjusted increase point 702 can be adjusted based on the calibration of the increase feature filter 316 recognizing the effect of the edge 407 of the parked vehicle 216 in the scan area 204.

The decrease feature filter 318 can process the corrected data input 315 to determine the presence of the decrease point 412. The decrease feature filter 318 can scan the range 405 to determine a decrease in the range 405 of greater than 10 percent followed by the identified point 404 at a substantially similar value of the range 405. The output of the decrease feature filter 318 is the decrease point scan 319, which identifies an adjusted decrease point 704. The adjusted decrease point 704 can be adjusted based on the calibration of the decrease point filter 318 recognizing the effect of the side surface 413 of the structural obstruction 214 in the scan area 204.

The flat feature filter 320 can determine boundary points 702 between significant changes in the range 405. The significant change in the range 405 can be greater that a 25 percent increase or decrease from the previous identified point 404. By way of an example, the boundary points 706 can be determined by detecting the increase point 408 and the decrease point 412 in the corrected data input 315. The output of the flat feature filter 320 can be the transition points scan 321 with the boundary points 706 adjusted to compensate for the edge effects of the scan area 204 from the edge 407 of the parked vehicle 216 and the side surface 413 of the structural obstruction 214. By way of an example the real-world location 203 of the adjusted increase point 702 and the adjusted decrease point 704 can be compared to the real-world location 203 of the boundary points 706.

The increase point scan 317, the decrease point scan 319, and the transition points scan 321 can be inputs to the feature merge filter 322. The feature merge filter 322 can combine the adjusted increase point 702 and the adjusted decrease point 704, as detected through the feature merge filter 322 to produce a processed scan 708. The processed scan 704 can verify the boundary points 706 actually coincide with the adjusted increase point 702 and the adjusted decrease point 704 by comparing the real-world coordinates 203. The processed scan 704 maintains the identified points 404 and marks the adjusted increase point 702 and the adjusted decrease point 704 for further processing.

It has been discovered that the feature detection processing flow 701 can be calibrated to efficiently detect the adjusted increase point 702 and the adjusted decrease point 704. The navigation system 100 of FIG. 1 can quickly and efficiently identify the increase point 408 and the decrease point 412 by monitoring for an increase or decrease of the range 405 that represents greater than 25 percent of the range 405 of the scan area 204 of FIG. 2. The feature merge filter 322 can mark the adjusted increase point 702 and the adjusted decrease point 704 that are adjusted to account of the noise and reflections caused by the edge 407 of the parked vehicle 216 and the side surface 413 of the structural obstruction 214. By way of an example, the scan area can have a maximum range of 10 meters, so any transition in excess of 2.5 meters will indicate either the increase point 408 or the decrease point 412 depending on the direction of the change. The hardware filters of the increase feature filter 316, the decrease feature filter 318 and the flat feature filter 320 can be calibrated either manually or by the second control circuit 534 of FIG. 5 through the filter manager 116 of FIG. 1.

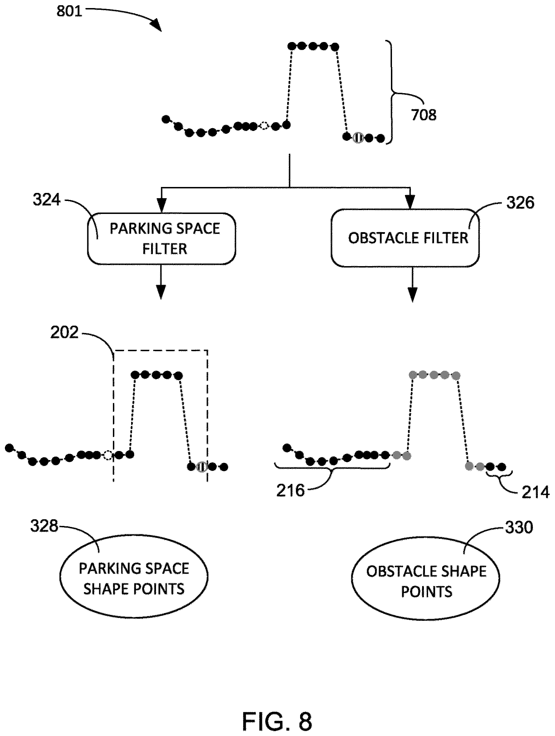

Referring now to FIG. 8, therein is shown an exemplary parking space and object detection processing data flow 801 of the navigation system 100 of FIG. 1. The exemplary parking space and object detection processing data flow 801 of the navigation system 100 depicts the processed scan 704 as an input to the parking space filter 324 and the obstacle filter 326. These filters can be calibrated by the second control unit 534 to identify features within the processed scan 704.

The parking space filter 324 can determine that there are a sufficient number of the identified points 404 between the increase point 408 and the decrease point 412 to identify the parking space 202. It is understood that the dimensions of the parking space 202 can extend beyond the increase point 408 and the decrease point 412 without impacting the surroundings.

The obstacle filter 326 can search for the hard boundaries of any obstacle adjacent to the parking space 202. The obstacle filter 326 can identify regions of the processed scan 704 to find the structural obstruction 214 of FIG. 2 and the parked vehicle 216 of FIG. 2. It is understood that the range 405 of FIG. 4 can vary while detecting the parked vehicle 216, due to its irregular shape. The structural obstruction 214 can be of a smaller size and it can have regular smooth surfaces, which reflect a consistent value for the range 405 across the width of the surface.

The parking space filter 324 can register the parking space shape points 328 that can locate the parking space 202 with a high degree of accuracy. It is understood that the parking space filter 324 can be calibrated by the second control circuit 534 or manually by the user 112 of FIG. 1. By the identification of the real-world position of the parking space 202, the second control circuit can produce the overhead depiction 109 of FIG. 1 and the vehicle maneuvering instructions 554 of FIG. 5 for the first device 102 to access the parking space 202.

The obstacle filter 326 can provide the obstacle shape points 330 as part of the overhead depiction 109. The obstacle shape points 330 can identify the parked vehicle 216 and the structural obstacles 214. By the identification of the real-world position of the obstacle shape points 330, can provide highly accurate identification of the parked vehicle 216 and the structural obstruction 214.

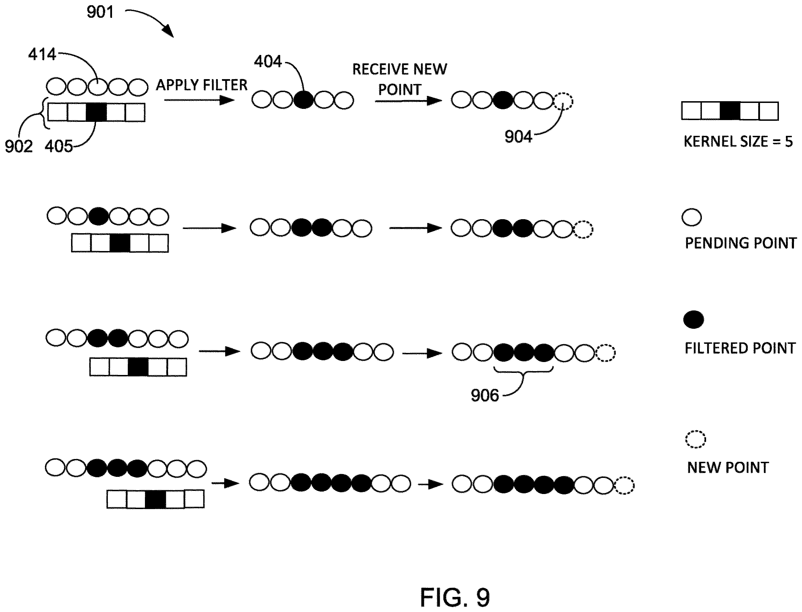

Referring now to FIG. 9, therein is shown an exemplary implementation of a distance filtering element 901 of the navigation system 100 of FIG. 1 in an embodiment of the present invention. The pending point 414 can be a memory location in the second storage circuit 546 of FIG. 5, the range 405 can be centered in a kernel 902 with a size of five. By transferring the range 405 to the pending point 414, the identified point 404 can be logged. After the filter is applied to create the identified point 404, a new point 904 can be allocated for the pending scan.

The kernel 902 can shift to the next pending point 414 for identifying the range 405 of the next sample generated by the ultrasound sensor 110 of FIG. 1. It is understood that the sample interval of the ultrasound sensor 110 can be in the range of 50 to 100 milliseconds. The processing of the captured values of the range 405 through the navigation system 100 can be completed in 2-5 milliseconds. The identification of the identified point 404, the missing point 406, the increase point 408, the false point 410, and the decrease point 412 can be identified when the next sample of the identified point 404 is stored in the second storage circuit 546.

When a triplet 906 of the identified point 404 has been stored, the filters can identify the missing point 406, the increase point 408, the false point 410, and the decrease point 412 that might have been captured. By way of an example, the object detection module 115 of FIG. 1 can identify single sample of the identified point 404 that display changes in the range 405. Continuing with the example, the triplet 906 can have a long range sample between two lesser range samples that are substantially equal, indicating the missing point 406. If the identified point 404 of the triplet 906 identifies two successively increasing values of the range, the increase point 408 can be identified. Other combinations of the triplet 906 can indicate the false point 410 and the decrease point 412.

It has been discovered that the navigation system 100 can be configured to support any type of the ultrasound sensor 110 that is used in the first device 102 of FIG. 1. By evaluating the triplet 906 all of the range errors, such as the missing point 406, and the false point 410, can be identified and corrected to provide a clearer version of the corrected data input 315 of FIG. 3 can be presented to the feature module 118. The navigation system 100 can quickly identify regions occupied by the structural obstruction 214 and the parked vehicle 216 as well as the available area of the parking space 202.

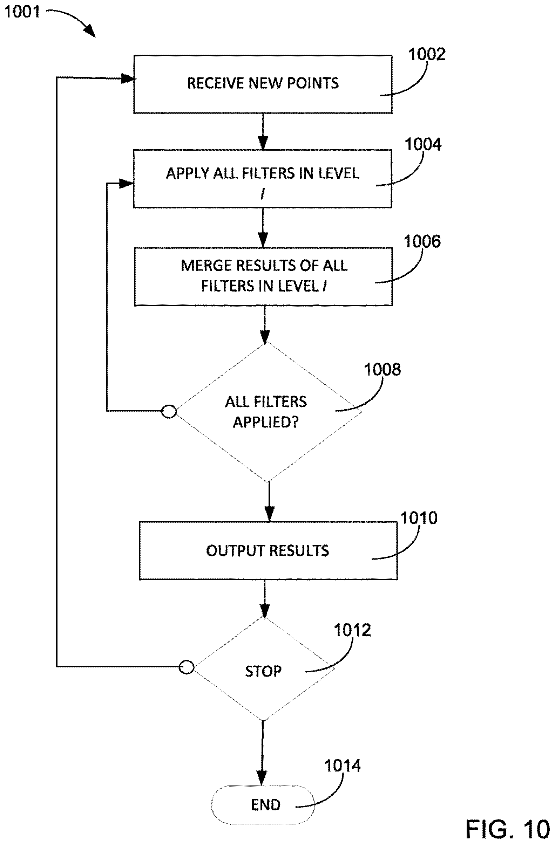

Referring now to FIG. 10, therein is shown an exemplary flow chart 1001 of an embodiment of the navigation system 100 of FIG. 1. The exemplary flow chart 1001 depicts a receive new points 1002, in which the second storage circuit 546 of FIG. 5 can allocate memory locations for analysis of the sensor data packet 111 of FIG. 1 captured values of the range 405 of FIG. 4 received from the ultrasound sensor 110 of FIG. 1. The flow proceeds to an apply all filters in level *I* module 1004, in which the missing point filter 308 of FIG. 3, the false point filter 310 of FIG. 3, the boundary sharpening filter 312 of FIG. 3, the increase feature filter 316 of FIG. 3, the decrease feature filter 318 of FIG. 3, the flat feature filter 320 of FIG. 3, the parking space filter 324 of FIG. 3, and the obstacle filter 326 of FIG. 3 can all be invoked. Due to the parallel nature of the filters, the filter manager 116 of FIG. 1 can calibrate and apply the feature module 118 of FIG. 1 and the line module 120 of FIG. 1 concurrently.

The flow proceeds to a merge results of all filters in level *I* module 1006, in which the aligned data module 306 of FIG. 3, the bottleneck merge filter 314 of FIG. 3, and the feature merge filter 322 of FIG. 3 can combine the interim results from their respective input filters. The flow proceeds to an all filters applied check 1008 to determine whether the parking space 202 of FIG. 2, the structural obstruction 214 of FIG. 2, the parked vehicle 216 of FIG. 2, or a combination thereof have been identified. If the all filters applied check 1008 determines that more data is being captured and the parking space 202 has not been identified, the flow returns to the apply all filters in level *I* module 1004 to continue processing the ranges captured by the ultrasound sensor 110.

Once the all filters applied check 1008 determines the parking space 202 has been identified, the flow proceeds to an output results module 1010. The output results module 1010 can alert the second control circuit 534 to generate the overhead depiction 109 of FIG. 1 and the vehicle maneuvering instructions 554 of FIG. 5 for transmission to and display on the first device 102 of FIG. 1. The flow proceeds to a stop module 1012 to determine whether the user 112 of FIG. 1 has accepted the parking space 202 that was identified or has decided to continue looking for an alternative space. If the user 112 decides to skip the parking space 202 and continue searching, the flow returns to the receive new points module 1002 to reinitiate the search. If the user 112 decides to take the parking space 202 identified by the navigation system 100, the flow proceeds to an end module 1014, in which the previously identified points 404 of FIG. 4 can be purged from the second storage circuit 546 in preparation for the next trip.

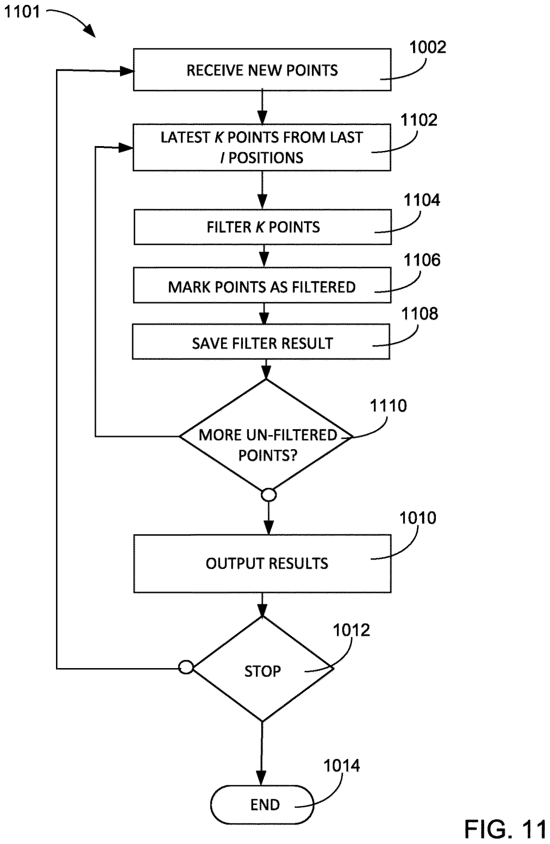

Referring now to FIG. 11, therein is shown an exemplary flow chart 1101 of an alternative embodiment of the navigation system 100 of FIG. 1 with a fixed kernel size. The exemplary flow chart 1101 depicts the receive new points 1002, in which the second storage circuit 546 of FIG. 5 can allocate memory locations for analysis of the sensor data packet 111 of FIG. 1 captured values of the range 405 of FIG. 4 received from the ultrasound sensor 110 of FIG. 1. The flow proceeds to a latest K points module 1102, in which latest K values of the range 405 detected by the ultrasound sensor 110 from the last *I* positions that were sampled. It is understood that the value of *K* and *I* can be a positive integer greater than one. The *K* values of the range 405 can be loaded into the second storage circuit 546 for filtering and analysis.

The flow proceeds to a filter K points module 1104, in which the missing point filter 308 of FIG. 3, the false point filter 310 of FIG. 3, the boundary sharpening filter 312 of FIG. 3, the increase feature filter 316 of FIG. 3, the decrease feature filter 318 of FIG. 3, the flat feature filter 320 of FIG. 3, the parking space filter 324 of FIG. 3, and the obstacle filter 326 of FIG. 3 can all be invoked. Due to the parallel nature of the filters, the filter manager 116 of FIG. 1 can calibrate and apply the feature module 118 of FIG. 1 and the line module 120 of FIG. 1 concurrently. The filtered points can be identified as one from among the identified point 404 of FIG. 4, the missing point 406 of FIG. 4, the increase point 408 of FIG. 4, the false point 410 of FIG. 4, and the decrease point 412 of FIG. 4.

The flow can proceed to a mark points as filtered module 1106, in which the missing point 406 and the false point 410 can be corrected and marked as the identified point 404. The increase point 408 and the decrease point 412 can be marked as the boundary points 702 of FIG. 7 indicating an area of the parking space 202 of FIG. 2.

The flow can proceed to a save filtered result module 1108, in which the second control circuit 534 can store the identified points 404 and the boundary points 702 in the second storage circuit 546 in preparation for generating the overhead depiction 109 and the vehicle maneuvering instructions 554 of FIG. 5. The flow proceeds to a more un-filtered points check 1110, in which the second control circuit 534 can detect whether there are additional pending points 414 of FIG. 4 that must be evaluated or whether new un-filtered data points have been generated, If more un-filtered points are detected, the flow returns to the latest K points module 1102 to repeat the analysis on the new unfiltered points. If there are no additional un-filtered points, the flow proceeds to the output results module 1010.

The output results module 1010 can alert the second control circuit 534 to generate the overhead depiction 109 and the vehicle maneuvering instructions 554 for transmission to and display on the first device 102 of FIG. 1. The flow proceeds to a stop module 1012 to determine whether the user 112 of FIG. 1 has accepted the parking space 202 that was identified or has decided to continue looking for an alternative space.

If the user 112 decides to skip the parking space 202 and continue searching, the flow returns to the receive new points module 1002 to reinitiate the search. If the user 112 decides to take the parking space 202 identified by the navigation system 100, the flow proceeds to an end module 1014, in which the previously identified points 404 can be purged from the second storage circuit 546 in preparation for the next trip.

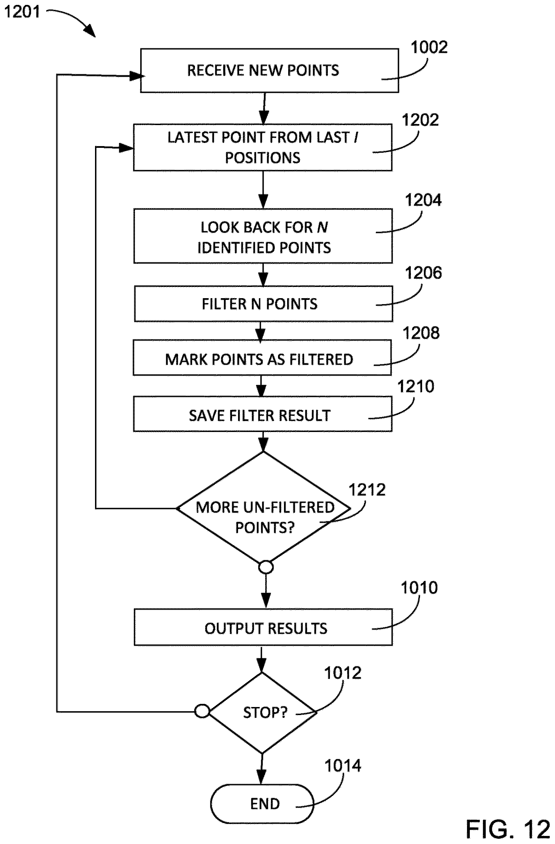

Referring now to FIG. 12, therein is shown an exemplary flow chart 1201 of an alternative embodiment of the navigation system 100 of FIG. 1 with a dynamic kernel size. The exemplary flow chart 1201 depicts the receive new points 1002, in which the second storage circuit 546 of FIG. 5 can allocate memory locations for analysis of the sensor data packet 111 of FIG. 1 captured values of the range 405 of FIG. 4 received from the ultrasound sensor 110 of FIG. 1. The flow proceeds to a last *I* positions module 1202, in which latest *I* values of the range 405 detected by the ultrasound sensor 110 from the last *I* positions that were sampled. It is understood that the value of *I* can be a positive integer greater than one. The *I* values of the range 405 can be loaded into the second storage circuit 546 for filtering and analysis.

The flow proceeds to a look back for N identified points module 1204, in which the second control circuit 534 of FIG. 5 can scan the previous N values of the range 405 stored in the second storage circuit 546 to further classify the ranges 405. The flow proceeds to a filter N points module 1206, in which the range 405 can be identified as one from among the identified point 404, the missing point 406, the increase point 408, the false point 410, and the decrease point 412.

The flow proceeds to a mark points as filtered module 1208, in which the second control circuit 534 can flag the missing point 406 and the false point 410 can be corrected and marked as the identified point 404. The increase point 408 and the decrease point 412 can be marked as the boundary points 702 of FIG. 7 indicating an area of the parking space 202 of FIG. 2.

The flow proceeds to a save filter result module 1210, in which the second control circuit 534 save the identified points 404 to the second storage circuit 546 for generation of the overhead depiction 109 and the vehicle maneuvering instructions 554 of FIG. 5. The flow proceeds to a more unfiltered points check 1212, in which the second control circuit 534 can detect whether there are additional pending points 414 of FIG. 4 that must be evaluated or whether new un-filtered data points have been generated, If more un-filtered points are detected, the flow returns to the last *I* positions module 1202 to repeat the analysis on the new unfiltered points. If there are no additional un-filtered points, the flow proceeds to the output results module 1010.

The output results module 1010 can alert the second control circuit 534 to generate the overhead depiction 109 and the vehicle maneuvering instructions 554 for transmission to and display on the first device 102 of FIG. 1. The flow proceeds to a stop module 1012 to determine whether the user 112 of FIG. 1 has accepted the parking space 202 that was identified or has decided to continue looking for an alternative space.

If the user 112 decides to skip the parking space 202 and continue searching, the flow returns to the receive new points module 1002 to reinitiate the search. If the user 112 decides to take the parking space 202 identified by the navigation system 100, the flow proceeds to an end module 1014, in which the previously identified points 404 can be purged from the second storage circuit 546 in preparation for the next trip.

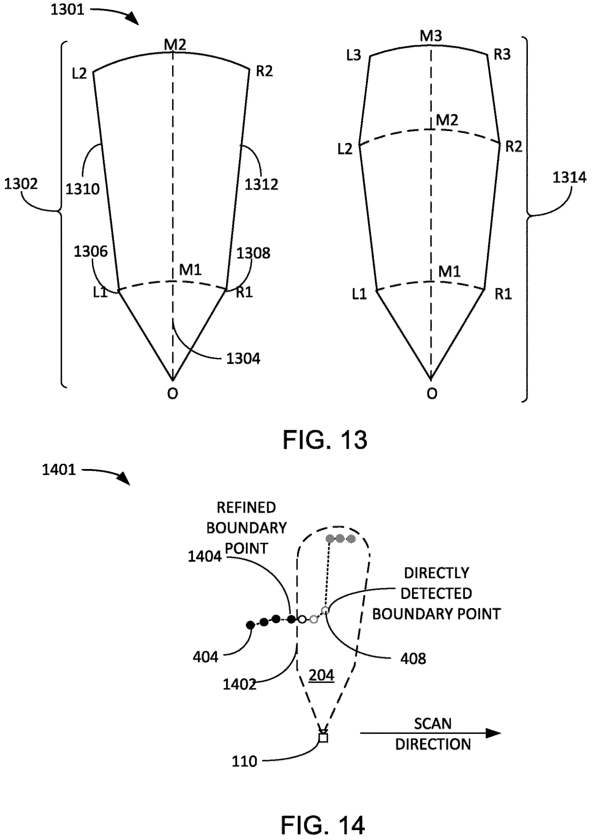

Referring now to FIG. 13, therein is shown an exemplary ultrasound sensor beam 1301 of the navigation system 100 of FIG. 1. The exemplary ultrasound sensor beam 1301 depicts a first beam pattern 1302 as projected from a specific one of the ultrasound sensor 110 of FIG. 1. It is understood that the centerline O--M2 1304 can have the strongest return. As an angle increases to L1 1306 or R1 1308, the returned power is reduced and can present fringe issues, such as echoes and extra reflections, that can complicate the identification of the range 405 of FIG. 4 of the identified point 404 of FIG. 4.

The filter management module 116 of FIG. 1 can calibrate the filters to adjust for detecting the identified point 404 of FIG. 4, the missing point 406 of FIG. 4, the increase point 408 of FIG. 4, the false point 410 of FIG. 4, and the decrease point 412 of FIG. 4. If an object is on the line L1--L2 1310 or line R1--R2 1312, the acoustic return is reduced and can cause the erroneous range 405, such as the missing point 406 and the false point 410. Any object that is outside the line L1--L2 1310 or the line R1--R2 1312 can be too weak to register. By scanning the first beam pattern 1302 in one direction, the objects will move into a strong return line OM2 1304. The burst rate for sampling the range 405 provided by the ultrasound sensor 110 can be in the range of 150-200 Hz.

A second beam pattern 1314 can provide a narrower field of view from the ultrasound sensor 110. The second sensor beam pattern 1314 can provide sharper definition at the edges of the parked vehicle 216 of FIG. 2 and the structural obstruction 214 of FIG. 2. It is understood that the maximum range of the first beam pattern 1302 and the second beam pattern 1314 are substantially the same and have a useable limit of approximately 10 meters.

Referring now to FIG 14, therein is shown an exemplary object detection diagram 1401 for detecting the boundary point 702 of FIG. 7 in an embodiment. The exemplary object detection diagram 1401 depicts the scan area 204 with the ultrasound sensor 110 moving in a scan direction as shown. The identified points 404 can be outside the scan area 204. At the time the increase point 408 is directly detected the trailing edge 1402 of the scan area 204 is actually past the obstacle that is plotted (not shown). While the trailing edge 1402 is still on the obstacle the partial reflections can be seen as the obstacle. In actuality, the increase point 408 can be adjusted to a refined boundary point 1404. By way of an example, the trailing edge 1402 of the scan area 204 can be beyond the obstacle in order to have no impact of the detection of the increase point 408.

It has been discovered that the actual position of the parking space 202 can be interpreted from the increase point 408 that is directly detected. Thus the parking space filter 324 of FIG. 3 can accurately position the parking space 202 of FIG. 2 in the overhead depiction 109 and is properly interpreted in the vehicle maneuvering instructions 554 of FIG. 5. The vehicle maneuvering instructions 554 allow the first device to access the parking space 202 outlined in the overhead depiction 109.

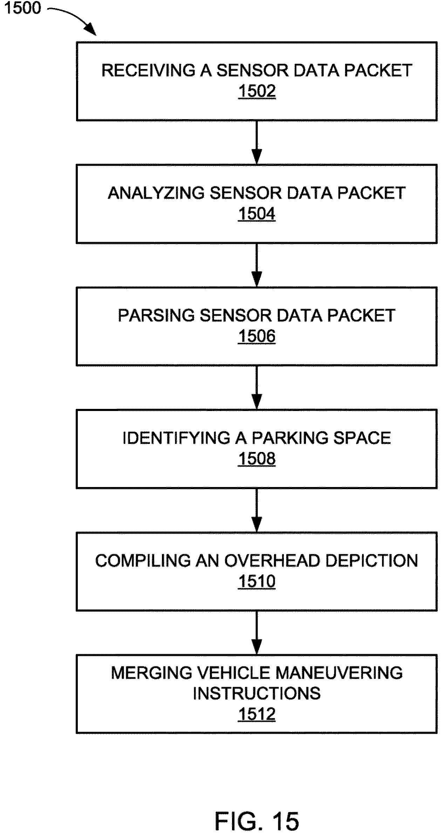

Referring now to FIG 15, therein is shown a flow chart of a method 1500 of operation of a navigation system 100 in an embodiment of the present invention. The method 1500 includes: receiving a sensor data packet for a range captured in a scan area in a block 1502; analyzing the sensor data packet including storing the sensor data packet in a block 1504; parsing the sensor data packet to generate a processed scan including identifying the real-world coordinates in a block 1506; identifying a parking space from the processed scan in a block 1508; compiling an overhead depiction including the real-world coordinates of the parking space identified by analyzing the scan area in a block 1510; and merging vehicle maneuvering instructions into the overhead depiction for accessing the parking space in a block 1512.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A navigation system (100) comprising: a control circuit (534) configured to:
receive a sensor data packet (111) for a range (405) captured in a scan area (204); analyze the sensor data packet (111) including storing the sensor data packet (111);
parse the sensor data packet (111) to generate a processed scan (704) including identifying the real-world coordinates (203);
identify a parking space (202) from the processed scan (704) submitted to a parking space filter (324);
compile an overhead depiction (109) including real-world coordinates (203) of the parking space (202) by analyzing the scan area (204); and
merge vehicle maneuvering instructions (554) into the overhead depiction (109) for accessing the parking space (202).

2. The system (100) as claimed in claim 1 wherein the control circuit (534) is configured to:
process a range data scan (602) including generate a missing point scan (309) from the range data scan (602) to correct the range (405) of a missing point (406); and
generate a corrected data input (315) including substitute a corrected range (604) for the missing point (406) in the missing point scan (309).

3. The system (100) as claimed in claim 1 or 2, wherein the control circuit (534) is configured to:
process a range data scan (602) including generate a false point scan (311) from the range data scan (602) to correct the range (405) of a false point (410); and
generate a corrected data input (315) including substitute an adjusted range (606) for the false point (410) in the false point scan (311).

4. The system (100) as claimed in any one of the preceding claims, wherein the control circuit (534) is configured to:
process a range data scan (602) including generate a boundary point scan (313) from the range data scan (602) to identify the range (405) of an identified point (404) that follows an increase point (408); and
generate a corrected data input (315) including substitute a follow-on point (608) for the identified point (404) that follows the increase point (408) in a boundary points scan (313).

5. The system (100) as claimed in any one of the preceding claims, wherein the control circuit (534) is configured to:
process a corrected data input (315) including generate an increase point scan (317) from the corrected data input (315) to identify an adjusted increase point (702); and
generate the processed scan (708) including the adjusted increase point (702) based on the real-world coordinates (203) of an edge (407) of a parked vehicle (216).

6. The system (100) as claimed in any one of the preceding claims, wherein the control circuit (512) is configured to:
process a corrected data input (315) including generate a decrease point scan (319) from the corrected data input (315) to identify an adjusted decrease point (704); and
generate the processed scan (708) including the adjusted decrease point (704) based on the real-world coordinates (203) of a side surface (413) of a structural obstruction (214).

7. The system (100) as claimed in any one of the preceding claims, wherein the control circuit (512) is configured to identify the real-world coordinates (203) of a structural obstruction (214) and a parked vehicle (216) from a processed scan (708).

8. The system (100) as claimed in any one of the preceding claims, wherein the control circuit (512) is configured to evaluate a triplet (906) of an identified point (404), which includes a false point (410) detected and replaced by an adjusted range (606).

9. A method (1500) of operation for a navigation system (100) comprising:
receiving a sensor data packet (111) for a range (405) captured in a scan area (204);
analyzing the sensor data packet (111) including storing the sensor data packet (111);
parsing the sensor data packet (111) to generate a processed scan (704) including identifying the real-world coordinates (203);
identifying a parking space (202) from the processed scan (704);
compiling an overhead depiction (109) including the real-world coordinates (203) of the parking space (202) identified by analyzing the scan area (204); and
merging vehicle maneuvering instructions (554) into the overhead depiction (109) for accessing the parking space (202).

10. The method (1500) as claimed in claim 9 further compromising:
processing a range data scan (602) including generating a missing point scan (309) from the range data scan (602) for correcting the range (405) of a missing point (406); and
generating a corrected data input (315) including substituting a corrected range (604) for the missing point (406) in the missing point scan (309).

11. The method (1500) as claimed in claim 9 or 10, further comprising:
processing a range data scan (602) including generating a false point scan (311) from the range data scan (602) for correcting the range (405) of a false point (410); and
generating a corrected data input (315) including substituting an adjusted range (606) for the false point (410) in the false point scan (311).

12. The method (1500) as claimed in any one of claims 9 to 11, further comprising:
processing a range data scan (602) including generating a boundary point scan (313) from the range data scan (602) for identifying the range (405) of an identified point (404) following an increase point (408); and
generating a corrected data input (315) including substituting a follow-on point (608) for the identified point (404) following the increase point (408) in a boundary points scan (313).

13. The method (1500) as claimed in any one of claims 9 to 12, further comprising:
processing a corrected data input (315) including generating an increase point scan (317) from the corrected data input (315) for identifying an adjusted increase point (702); and
generating the processed scan (708) including the adjusted increase point (702) based on the real-world coordinates (203) of an edge (407) of a parked vehicle (216).

14. The method (1500) as claimed in any one of claims 9 to 13, further comprising:
processing a corrected data input (315) including generating a decrease point scan (319) from the corrected data input (315) for identifying an adjusted decrease point (704); and
generating the processed scan (708) including the adjusted decrease point (704) based on the real-world coordinates (203) of a side surface (413) of a structural obstruction (214).
